# EUROPEAN PATENT APPLICATION

(11) **EP 4 163 846 A1**
(43) Date of publication of application: **12.04.2023**
(21) Application number: 21200982.3
(22) Date of filing: 05.10.2021
(51) Int. Cl.: G06Q 10/08, H04L 9/32, H04L 67/12

(54) **STORING OBJECT DATA IN A BLOCKCHAIN**

(71) Applicant: Siemens Aktiengesellschaft, 80333 München (DE)
(72) Inventor: Singh, Saurabh Narayan, 81739 München (DE); Zupan, Nejc, 80337 München (DE)
(74) Representative: Siemens Patent Attorneys

(57) **Abstract**

The invention relates to a computer-implemented method for storing data of a first object in a blockchain, comprising the steps:
- receiving a first dataset of the first object,
- assigning a first identifier to the first object,
- storing the first dataset in a first data block of the blockchain, wherein first metadata are generated for the first data block and stored therein, and wherein the first identifier is stored as part of the first metadata,
- receiving (S4) a second dataset (D12) of the first object (OBJ1), wherein the second dataset (D12) differs from the first dataset (D11),
and
- storing (S5) the second dataset (D12) in a second data block (B2) of the blockchain, wherein second metadata (MD2) are generated for the second data block (B2) and stored therein, and wherein the first identifier (ID1 1) and a link (L_B1) to the first data block (B1) is stored as part of the second metadata (MD2).

The invention realizes a blockchain that supports dynamic data storage at protocol level decreasing overhead and providing scalability.

## Description

The present invention relates to a computer-implemented method for storing data of an object in a blockchain, a blockchain system, and a computer program product.

Blockchain technologies provide an audit trail of transactions in an immutable manner. Therefore, blockchains provide a way to store assets and track changes during the lifetime of the asset. Data of digital twins or asset provenance tracking are strong exemplary use cases of blockchain. Smart contracts provide an execution layer on top of the blockchain to allow for management of the data. Using smart contracts, most blockchains frameworks aim to create a general-purpose framework which can be used to create solutions for any use case, i.e., for example data storage for supply chain use cases. However, due to automated code execution and decentral decision making of the smart contracts, asset tracking or tracking of digital twins requires a significant overhead in computing resources. That means computation in these frameworks can be relatively slow. Therefore, the usage of a blockchain for asset tracking can be cumbersome and costly.

It is therefore an objective of the present invention to simplify the usage of blockchains for data storage.

The objective is solved by the features of the independent claims. The dependent claims contain further developments of the invention.

The invention provides according to the first aspect a computer-implemented method for storing data of a first object in a blockchain, comprising the steps:
- receiving a first dataset of the first object,
- assigning a first identifier to the first object, and
- storing the first dataset in a first data block of the blockchain, wherein
   - first metadata are generated for the first data block and stored therein,
   - and the first identifier is stored as part of the first metadata.

Unless indicated otherwise in the description below, the terms "perform", "calculate", "compute", "discover", "generate", "configure", "reconstruct" and the like preferably relate to actions and/or processes and/or processing steps that alter and/or produce data and/or that convert data into other data, the data being able to be presented or available as physical variables, in particular, for example as electrical impulses. In particular, the expression "computer" should be interpreted as broadly as possible in order to cover in particular all electronic devices having data processing properties. Computers can therefore be for example personal computers, servers, programmable logic controllers (PLCs), handheld computer systems, Pocket PC devices, mobile radios and other communication devices that can process data in computer-aided fashion, processors and other electronic devices for data processing.

Within the context of embodiments of the invention, "assign", in particular in regard to data and/or information, can be understood to mean for example computer-aided assignment of data and/or information. For example, a first identifier is assigned to a first object by storing the first identifier together with at least an information about the first object in a data record.

Within the context of embodiments of the invention, "provide", in particular in regard to data and/or information, can be understood to mean for example computer-aided provision. Provision is effected for example via an interface (e.g. a database interface, a network interface, an interface to a memory unit). This interface can be used for example to convey and/or send and/or retrieve and/or receive applicable data and/or information during the provision.

Within the context of embodiments of the invention, "provision" can also be understood to mean for example loading or storing, for example of a transaction containing applicable data. This can, by way of example, be effected on or by a memory module. "Provision" can also be understood to mean for example transmitting (or sending or conveying) of applicable data from one node to another node of the blockchain.

Within the context of embodiments of the invention, a "checksum", for example a data block checksum, a data checksum, a node checksum, a transaction checksum, a concatenation checksum or the like, can be understood to mean for example a cryptographic checksum or cryptographic hash or hash value, which are formed or calculated, in particular by means of a cryptographic hash function, for a data record and/or data and/or one or more of the transactions and/or a subregion of a data block (e.g. the block header of a block of a blockchain or data block header of a data block of the distributed database system or only some of the transactions of a data block).

Within the context of embodiments of the invention, a "data block checksum" can be understood to mean a checksum that for example is calculated for some or all transactions of a data block. A node can then, by way of example, check/discover the integrity/authenticity of the applicable part of a data block by means of the data block checksum. Additionally or alternatively, the data block checksum may in particular also have been formed for transactions of a preceding data block/predecessor data block of the data block. This data block checksum can in particular also be realized by means of a hash tree, for example a Merkle tree or a Patricia tree, wherein the data block checksum is in particular the root checksum of the Merkle tree or of a Patricia tree or of a binary hash tree. The data block checksum can, in particular, be calculated for transactions of a specific data block of the data blocks. In particular, such a data block checksum can be adopted in a succeeding data block of the specific data block in order to concatenate this succeeding data block with its preceding data blocks. The header of a data block (e.g., of a new data block or of the data block for which the data block checksum has been formed) can comprise the data block checksum, for example.

Within the context of embodiments of the invention, "concatenation of (the) data blocks of a blockchain" can be understood to mean for example that data blocks each comprise information referring to or referencing another data block or multiple other data blocks of the blockchain.

Within the context of embodiments of the invention, "insertion into the blockchain" or "storing data in a data block" and the like can be understood to mean for example that, in particular, a transaction or the transactions or a data block with its transactions is conveyed to one or more nodes of a blockchain system. If these transactions are for example validated successfully (e.g., by the node/s), these transactions are in particular concatenated as a new data block with at least one existing data block of the blockchain. For this purpose, the applicable transactions are stored for example in a new data block. In particular, this validation and/or concatenation can be performed by a trusted node/validator node (e.g., a mining node, a blockchain oracle or a blockchain platform).

Within the context of embodiments of the invention, "transaction" or "transactions" can be understood to mean for example a data structure or a transaction data record that, in particular, each comprise one of the transactions or multiple transactions. Within the context of embodiments of the invention, "transaction" or "transactions" can also be understood to mean for example the data of a transaction of a data block of a blockchain.

Within the context of embodiments of the invention, "data block", which, in particular depending on context and implementation, can also be referred to as "block", can be understood to mean for example a data block of a blockchain. A data block can comprise details pertaining to the size (data size in bytes) of the data block, a data block header (block header), a transaction counter and one or more transactions, for example. The data block header can comprise a version, a data block checksum, a timestamp, proof-of-work evidence and a nonce (one-time value, random value or counter used for the proof-of-work evidence), for example.

Within the context of embodiments of the invention, a "blockchain node", "node", "node of a distributed database system" and the like can be understood to mean for example devices (e.g., field devices), computers, smartphones, sensors, clients or subscribers that perform operations for (with) the distributed database system (e.g., a blockchain). Such nodes can, by way of example, execute transactions of a blockchain or the data blocks thereof or insert or concatenate new data blocks with new transactions into the blockchain.

Within the context of embodiments of the invention, an "object" can be understood to mean a technical object or a technical system, e.g., a machine or device. The object can also be understood to mean a physical object, e.g., a valuable item. Also, the object can be understood to mean an asset, e.g., a digital asset. Preferably, data of said object can be measured/collected, e.g., using a sensor. Data can for example comprise information about the object, e.g., provenance, size, weight, an identity, measurement values, etc. For example, if the object is a machine, data of its digital twin can be collected. In another example, the object can be for example an asset, e.g., goods, food, valuable items, wherein information about the asset, e.g., value, state, current location, etc., can be collected.

It is an advantage of the invention to provide an asset specific blockchain design which allows tracking any object / any information about an object on a blockchain. Since each object is assigned a unique object identifier, the objects of the same use case can be linked to each other. This enables a faster, more efficient blockchain for asset tracking.

Furthermore, smart contracts are not needed for data storage, e.g., asset tracking and traceability of use cases.

Complex assets, e.g., large data sets of digital twins, can be created and tracked backward and forward to identify all the relevant components and/or updates.

The asset creation, transfer, evolution, and/or retrieval are supported at a protocol level of the blockchain. Furthermore, this increases security as the asset creation, transfer, evolution, and/or retrieval procedures are not subject to manipulation of functionality by, e.g., the developers. The retrieval of assets is faster because of direct links between data blocks that contain asset related transactions.

According to a preferred embodiment of the invention, the method can further comprise the steps:
- receiving a second dataset of the first object, wherein the second dataset differs from the first dataset,
   and
- storing the second dataset in a second data block of the blockchain, wherein
   - second metadata are generated for the second data block and stored therein,
   - and the first identifier and a link to the first data block is stored as part of the second metadata.

Data tracking and retrieval is improved due to links between data blocks containing data of the first object and specifying the respective identifier of said object in the metadata of the relevant data blocks.

According to a preferred embodiment of the invention, storing a first or second dataset in a respective data block can be authorized by selected nodes of the blockchain, wherein the nodes are selected depending on the first object.

Therefore, a faster consensus can be reached for each transaction by limiting the voting/validation to relevant stakeholders.

According to a preferred embodiment of the invention, respective metadata of a respective data block can comprise an information about the nodes that are selected to authorize storing a dataset in the respective data block.

Preferably, only a subset of nodes can vote for each transaction. Therefore, a list of nodes can be maintained. Therefore, e.g., in case of a dispute, it can be found out which nodes authorized a transaction. Since the group of nodes responsible for the consensus is smaller, the consensus can be reached faster compared to the scenario where all nodes would be involved in the process.

According to a preferred embodiment of the invention, respective metadata of a respective data block can comprise a link to the last one of the preceding data blocks comprising a dataset of the first object and/or a link to the next one of the subsequent data blocks comprising a dataset of the first object.

Linking data blocks that belong to the same object and/or comprising data belonging to the same object simplifies data retrieval for said object.

According to another embodiment of the invention, respective metadata of a respective data block can comprise
- a second identifier of a second object, wherein the second object depends on the first object,
   and/or
- a third identifier of a third object, wherein the first object depends on the third object.

The respective identifier enables to track an evolution, development, integration (into another object), composition and/or modification of an object. The tracking can be forwards and/or backwards in the blockchain.

According to another embodiment of the invention, if the second dataset relates to a combination of the first object with the second object, the second identifier can be updated accordingly.

Therefore, the second identifier allows backward tracking of the evolution of an object.

According to another embodiment of the invention, if the first object depends on another object, the third identifier can be updated accordingly.

Therefore, the third identifier allows forward tracking of an evolution of an object.

According to another embodiment of the invention, a request for data retrieval of the first object can be received and the respective data blocks with metadata comprising the first identifier are selected and provided.

The data of the first object can be inspected in forward and/or backward direction in the blockchain. For example, when the history of the object is requested, the traversal can start from the latest data block. Each block associated with the first object comprises a pointer/link to the previous block with the state of the object. The data retrieval does not require to go through all data blocks of the blockchain and is therefore faster.

According to another embodiment of the invention, the first object can be a physical object.

The invention provides according to the first aspect a blockchain system comprising a plurality of nodes, wherein the blockchain system is configured to perform the method steps according to one of the method claims.

In addition, a computer program product (non-transitory computer readable storage medium having instructions, which when executed by a processor, perform actions) having program instructions for performing the aforementioned methods according to embodiments of the invention is claimed, wherein one of the methods according to embodiments of the invention, all of the methods according to embodiments of the invention or a combination of the methods according to embodiments of the invention is performable by means of the computer program product each time.

The invention will be explained in more detail by reference to the accompanying figures.
- Fig. 1:: shows a first exemplary embodiment of the method for storing data of a first object in a blockchain;
- Fig. 2:: shows a second exemplary embodiment of the method for storing data of a first object in a blockchain; and
- Fig. 3:: shows an exemplary embodiment of a blockchain system according to the invention.

Equivalent parts in the different figures are labeled with the same reference signs.

Moreover, in particular a (relevant) person skilled in the art, with knowledge of the method claim/method claims, is of course aware of all routine options for realizing products or options for implementation in the conventional art, and so there is no need in particular for independent disclosure in the description. In particular, these customary realization variants known to a person skilled in the art can be realized exclusively by hardware (components) or exclusively by software (components). Alternatively and/or additionally, a person skilled in the art, within the scope of his/her expert ability, can choose to the greatest possible extent arbitrary combinations according to embodiments of the invention of hardware (components) and software (components) in order to implement realization variants according to embodiments of the invention.

In particular, in view of the high number of different realization options, it is impossible and also not helpful or necessary for the understanding of embodiments of the invention to name all these realization options. In this respect, in particular all the exemplary embodiments below are intended to demonstrate merely by way of example a few ways in which in particular such realizations of the teaching according to embodiments of the invention could be manifested.

Consequently, in particular the features of the individual exemplary embodiments are not restricted to the respective exemplary embodiment, but rather relate in particular to embodiments of the invention in general. Accordingly, features of one exemplary embodiment can preferably also serve as features for another exemplary embodiment, in particular without this having to be explicitly stated in the respective exemplary embodiment.

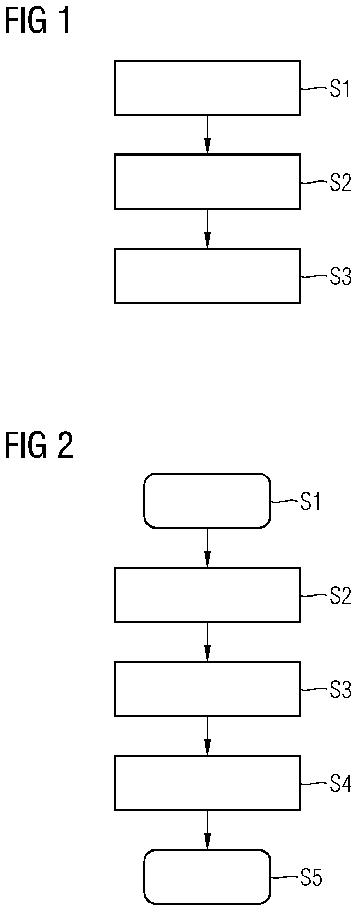

Figure 1 shows a first exemplary embodiment of the invention. It shows a flow chart illustrating the method steps of a computer-implemented method for storing data of a first object in a blockchain. The blockchain is preferably realized by a blockchain system/blockchain network comprising a plurality of nodes. Data of the object can for example be measured using a sensor. The first object is for example a machine, an industrial plant, or a physical item. The data of the machine or of the industrial plant can for example be used to operate a digital twin. The data of a physical item can for example be used to track a location, an ownership, or a state of the physical item.

In the first step S1 of the method a first data set of the first object is received or read in. For example, the data is provided by a sensor.

In the next step S2 a first identifier is assigned to the first object. Preferably, the first identifier is a unique identifier for tracking the object on the blockchain.

In the next step S3 the first dataset is stored in a data block of the blockchain. The data block can be the first data block of the blockchain. In other words, the first dataset is inserted into the blockchain. For example, the first dataset is inserted as a transaction in the blockchain. If the transaction is validated successfully, the transaction can be concatenated as a (new) data block with at least one existing data block of the blockchain. The validation of the transaction/the new data block can be performed by selected nodes of the blockchain system. Validator nodes can for example be selected depending on the first object, e.g., users and/or owners of the first object.

When storing the first dataset in the blockchain, first metadata are generated for the first data set and stored therein. The first metadata comprise the first identifier of the first object.

Figure 2 shows another flow chart as an exemplary embodiment of a computer-implemented method for storing data of a first object in a blockchain.

In the first step S1 a first dataset of the first object is received. In the next step S2 a first identifier is assigned to the first object. In this way, data of the first object can be easily tracked in the blockchain. In the next step S3 the first dataset is stored in a first data block of the blockchain wherein first metadata are generated for the first data block and stored therein, and wherein the first identifier is stored as part of the first metadata.

In the next step S4 a second dataset of the first object is received. The second dataset preferably differs from the first dataset. For example, a sensor can collect data of a machine or an industrial plant, wherein the data of said object can be part of its digital twin. A second dataset can then be for example an updated sensor value. Therefore, preferably the second dataset is of a same dataset type as the first dataset. For example, the second dataset is an update of the first dataset and/or replaces it.

In the next step S5 the second dataset is stored in a second data block of the blockchain. Alternatively, the second data block can for example be one of the succeeding data blocks of the first data block. Second metadata are generated for the second data block and stored therein. The second metadata comprise the first identifier and a link or a pointer to the first data block.

In other words, when a new/an updated dataset of the first object is received and is to be inserted in the blockchain, the new dataset is stored in a new data block of the blockchain, the first identifier is assigned to said new data block, metadata are generated for said new data block and stored therein, wherein the first identifier and a link to the preceding data block, that comprises a dataset of the first object, is stored as part of the metadata of the new data block.

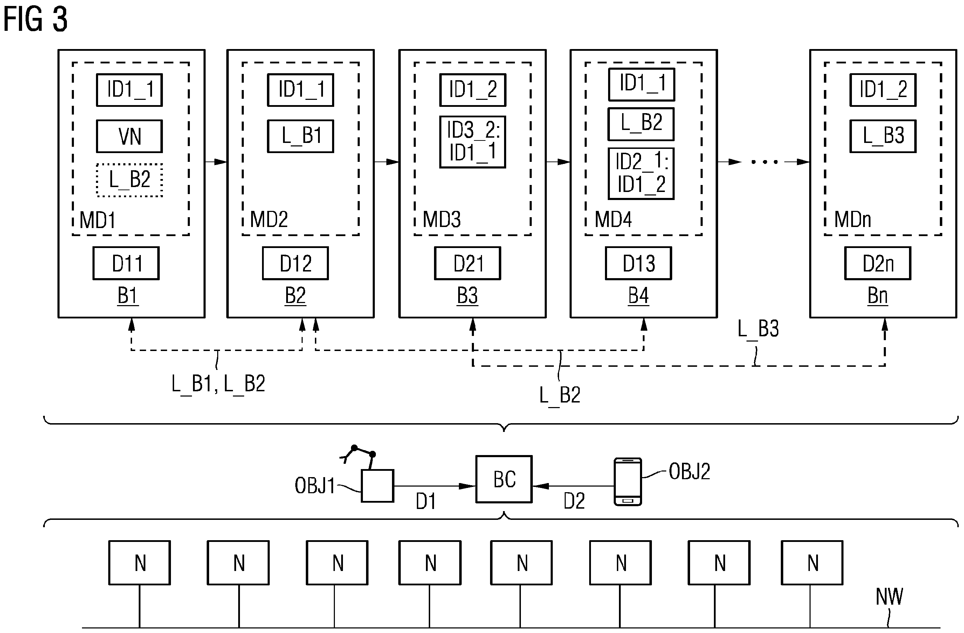

Figure 3 shows another exemplary embodiment of a blockchain system according to the invention.

A blockchain system BC is shown comprising a plurality of blockchain nodes N that are interconnected forming a network NW. The blockchain system is configured to perform a method for storing data of an object in a blockchain as exemplarily shown in Figures 1 and 2. In other words, the blockchain is based on a protocol according to these method steps.

The blockchain BC is composed of data blocks B1, ..., Bn which are concatenated with each other. A data block B1, ..., Bn comprises metadata MD1, ..., MDn. The metadata MD1, ..., MDn comprise at least a first identifier ID_1, ID_2 assigned to an object OBJ1, OBJ2, respectively.

For example, data D1 of a first object OBJ1 can be received to be inserted into the blockchain. The first object OBJ1 can be for example a machine, e.g., an industrial robot. Data D1 of the industrial robot OBJ1 can for example be recorded by means of a sensor. A first dataset D11 (of the data D1) of the industrial robot OBJ1 can be stored in a first data block B1 of the blockchain. A first dataset D11 can for example be a first sensor value. A first identifier ID1_1 is assigned to the industrial robot OBJ1 and stored in the metadata MD1 of the first data block B1. Furthermore, the metadata MD1 can comprise information about validator nodes VN, that are authorized to validate said data block.

When a second dataset D12 (of the data D1) is received from the industrial robot OBJ1, the second dataset D12 can be stored in a second data block B2. For example, the second dataset D12 can be an updated sensor value relating for example to another state of the industrial robot OBJ1. The metadata MD2 of the second data block B2 comprise the identifier ID1_1 of the industrial robot as well as a link L_B1 to the first data block B1. Furthermore, the metadata MD1 of the first data block B1 can be updated to include a link L_B2 to the second data block B2.

In addition to the data D1 of the industrial robot OBJ1, data D2 of another object OBJ2, e.g., a mobile device, can be stored in the blockchain BC. A first identifier ID1_2 is generated for the mobile device OBJ2. A first dataset D21 of the mobile device OBJ2 is received and stored in a next data block B3 of the blockchain. The identifier ID1_2 of the mobile device OBJ2 is stored as part of the metadata MD3 of said data block B3. An updated dataset D2n of the mobile device OBJ2 can be stored in one of the subsequent data blocks Bn, wherein the metadata MDn of said data block Bn comprise the identifier ID1_2 of the mobile device OBJ2 as well as a link L B3 to the last data block B3 that comprises a dataset of the mobile device OBJ2.

Furthermore, another updated dataset D13 of the industrial robot OBJ1 can be stored in subsequent data block B4. A link L_B2 to the preceding data block (i.e., the second data block B2) comprising data of the industrial robot OBJ1 is stored as part of the metadata MD4.

In case the mobile device OBJ2 depends on the industrial robot OBJ1, e.g., a software of the mobile device relates to software of the industrial robot, a second identifier (also referred to as "child-identifier") ID2_1 for the industrial robot OBJ1 is stored in the metadata MD4 referring to the identifier ID1_2 of the of the mobile device OBJ2.

In case the industrial robot OBJ1 depends on the mobile device OBJ2, e.g., the mobile device is a component (e.g., a control device) of/assigned to the industrial robot, a third identifier (also referred to as "parent-identifier") ID3_2 for the mobile device OBJ2 is stored in the metadata MD3 referring to the identifier ID1_1 of the of the industrial robot OBJ1.

Alternatively, the blockchain system BC can for example be used for supply chain management for example for tracking an asset. There are four types of transactions supported in this blockchain system.

Firstly, an asset can be created. Every asset is provided a unique asset identifier which is used to track the history and evolution of asset. Based on a use case, participants of the use case are also defined by the user or group of users. These participants are preferably the main voters/validator nodes for authorizing a transaction comprising asset data. When an asset creation is proposed, a new transaction is proposed by a respective stakeholder. Preferably, only the participants of the use case are authorized to validate this transaction. This allows for parallel creation of transactions for different use cases and faster consensus achievement. The asset data is part of the transaction, wherein the unique identifier assigned to the asset is stored as part of the metadata of the data block. If the asset contains child assets, then the respective child-identifier can be filled with the references to those assets. If the asset contains parent assets, then the respective parent-identifier can be filled with the references to those assets.

Secondly, an asset can be updated. When an assets state is updated, a new transaction is created, comprising the updated dataset of the asset. If the proposed new dataset is accepted by all the participants, the transaction is created. The transaction contains in its metadata at least the link to the previous block which contains this asset/data of this asset. The updates can be of two kinds: first, an attribute of the asset can be updated (e.g., color), second, an evolution of the asset can be documented. The latter can for example be an aggregation of assets (e.g., wheel assets becoming part of a car asset). In this case the child-identifier can be added or updated. Alternatively, the asset is part of a sub-class of different assets. Then, the parent-identifier can be included or updated.

Thirdly, the asset can be transferred to another owner. When a stakeholder initiates the transfer of an asset, an owner identity can be checked against the identifier of the asset. If the identities match, the transfer is initiated, and a new transaction is created with updated owner identity.

Lastly, an asset or data of an asset can be retrieved. Due to its unique structure/protocol, the proposed blockchain framework can support fast, high performant traversal and retrieval of assets. Any chosen asset can be traversed in forward and backward directions. When an asset's history is requested, the traversal can start from the last data block. Since each block comprising asset data has a pointer to the previous block with the state of asset, the traversal does not have to go through all the data blocks. If an asset is created based on other assets, this traversal can be bidirectional, moving back till individual assets are found, and moving forward from those assets to identify which composite assets comprise singular assets.

Although the present invention has been described in detail with reference to the preferred embodiment, it is to be understood that the present invention is not limited by the disclosed examples, and that numerous additional modifications and variations could be made thereto by a person skilled in the art without departing from the scope of the invention.

## Claims

1. Computer-implemented method for storing data of a first object in a blockchain (BC), comprising the steps:
- receiving (S1) a first dataset (D1) of the first object (OBJ1),
- assigning (S2) a first identifier (ID1_1) to the first object (OBJ1),
and
- storing (S3) the first dataset (D11) in a first data block (B1) of the blockchain (BC), wherein
- first metadata (MD1) are generated for the first data block (B1) and stored therein,
- and the first identifier (ID1_1) is stored as part of the first metadata (MD1).

2. Computer-implemented method according to claim 1, further comprising the steps:
- receiving (S4) a second dataset (D12) of the first object (OBJ1), wherein the second dataset (D12) differs from the first dataset (D11),
and
- storing (S5) the second dataset (D12) in a second data block (B2) of the blockchain, wherein
- second metadata (MD2) are generated for the second data block (B2) and stored therein,
- and the first identifier (ID1_1) and a link (L_B1) to the first data block (B1) is stored as part of the second metadata (MD2).

3. Computer-implemented method according to one of the preceding claims, wherein storing a first or second dataset in a respective data block is authorized by selected nodes of the blockchain, wherein the nodes are selected depending on the first object (OBJ).

4. Computer-implemented method according to one of the preceding claims, wherein respective metadata of a respective data block comprise an information (VN) about the nodes that are selected to authorize storing a dataset in the respective data block.

5. Computer-implemented method according to one of the preceding claims, wherein respective metadata of a respective data block comprise a link (L_B1, L_B2, L_B3) to the last one of the preceding data blocks comprising a dataset of the first object and/or a link to the next one of the subsequent data blocks comprising a dataset of the first object (L_B2).

6. Computer-implemented method according to one of the preceding claims, wherein respective metadata of a respective data block comprise
- a second identifier (ID2_1) of a second object, wherein the second object depends on the first object,
and/or
- a third identifier (ID3_2) of a third object, wherein the first object depends on the third object.

7. Computer-implemented method according to one of the preceding claims, wherein, if the second dataset relates to a combination of the first object with the second object, the second identifier is updated accordingly.

8. Computer-implemented method according to one of the preceding claims, wherein, if the first object depends on another object, the third identifier is updated accordingly.

9. Computer-implemented method according to one of the preceding claims, wherein a request for data retrieval of the first object is received and the respective data blocks with metadata comprising the first identifier are selected and provided.

10. Computer-implemented method according to one of the preceding claims, wherein the first object is a physical object.

11. Blockchain system (BC) comprising a plurality of nodes (N), wherein the blockchain system is configured to perform the method steps according to one of the preceding claims.

12. Computer program product directly loadable into the internal memory of a digital computer, comprising software code portions for performing the method steps according to one of the claims 1 to 10 when said computer program product is run on a computer.
